# EUROPEAN PATENT APPLICATION

(11) **EP 1 783 364 A2**
(43) Date of publication of application: **09.05.2007**
(21) Application number: 06255640.2
(22) Date of filing: 02.11.2006
(51) Int. Cl.: F03D 9/02, F03D 9/00, F02C 6/16

(54) **Wind power generation systems and method of operating same**

(30) Priority: 03.11.2005 US 265961
(71) Applicant: General Electric Company, Schenectady, NY 12345 (US)
(72) Inventor: Joshi, Narendra Digamber, Cincinnati, Ohio 45241 (US); Rahm, Steven George, Loveland, Ohio 45140 (US); Bhatnagar, Alok R., Atlanta, Georgia 30350 (US)
(74) Representative: Illingworth-Law, William Illingworth

(57) **Abstract**

A method for operating a power generation system (6) including a wind turbine (100) and a turbine assembly (8). The method includes operating the wind turbine, storing the energy generated by the wind turbine as compressed air (9), and channeling the compressed air to the turbine assembly when needed.

## Description

### BACKGROUND OF THE INVENTION

This invention relates generally to wind turbines, and more specifically to a combined wind turbine and gas turbine system.

In at least one known system, a plurality of wind turbines, commonly referred to as wind energy farms are installed in various geographic locations to facilitate harvesting wind energy when it is available.

The power output of the wind turbine is limited by either the mechanical load on the turbine blades and/or the mechanical load on the generator or the availability of wind. Accordingly, the electrical output of each wind farm varies depending on the various wind conditions and the mechanical load on the wind turbine. More specifically, although wind energy farms provide a clean and renewable source of energy, the power output generated by each wind turbine varies based on the wind, and thus reduces the usefulness of the energy generated by the wind energy farm. For example, producing wind energy during the night, when demand is relatively low, may result in reduced local marginal pricing of the electricity generated by the wind energy farms and/or increased cycling of the baseload plants.

### BRIEF SUMMARY OF THE INVENTION

In one aspect, a method for operating a power generation system including a wind turbine and a turbine assembly is provided. The method includes operating the wind turbine, storing the energy generated by the wind turbine as compressed air, and channeling the compressed air to the turbine assembly when the power demand exceeds a predetermined threshold.

In another aspect, a power generating system is provided. The power generating system includes a wind turbine, a storage device configured to store energy generated by said wind turbine as compressed air, and a turbine assembly configured to receive the compressed air when the power demand exceeds a predetermined threshold.

In a further aspect, a power generating system is provided. The power generating system includes a wind turbine, an air compressor operationally coupled to the wind turbine, a turbine assembly including a combustor, a turbine, a recuperator coupled in flow communication with the wind turbine, and a generator operationally coupled to the turbine.

### BRIEF DESCRIPTION OF THE DRAWINGS

Embodiments of the present invention will now be described, by way of example only, with reference to the accompanying drawings, in which:
Figure 1 is a perspective view of an exemplary power system;
Figure 2 is schematic illustration of an exemplary gas turbine assembly that can be used with the power system shown in Figure 1;
Figure 3 is perspective view of an exemplary wind turbine that can be used with the power system shown in Figure 1;
Figure 4 is a perspective view of a portion of the wind turbine shown in Figure 3;
Figure 5 is schematic illustration of an exemplary turbine assembly that can be used with the wind turbine shown in Figure 3;
Figure 6 is perspective view of an exemplary wind turbine that can be used with the turbine assembly shown in Figure 5;
Figure 7 is a perspective view of a portion of the wind turbine shown in Figure 6; and
Figure 8 is an exemplary temperature/entropy chart.

### DETAILED DESCRIPTION OF THE INVENTION

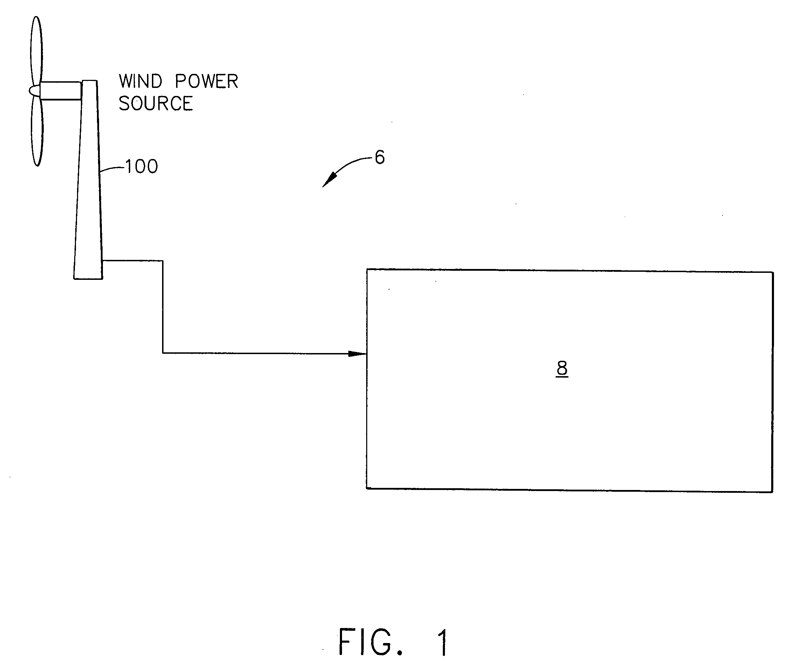

Figure 1 is a perspective view of an exemplary power system 6. Power system 6 includes a turbine generator assembly 8 and a wind turbine assembly 100 that is configured to channel compressed air 9 to the gas to the turbine generator assembly 8.

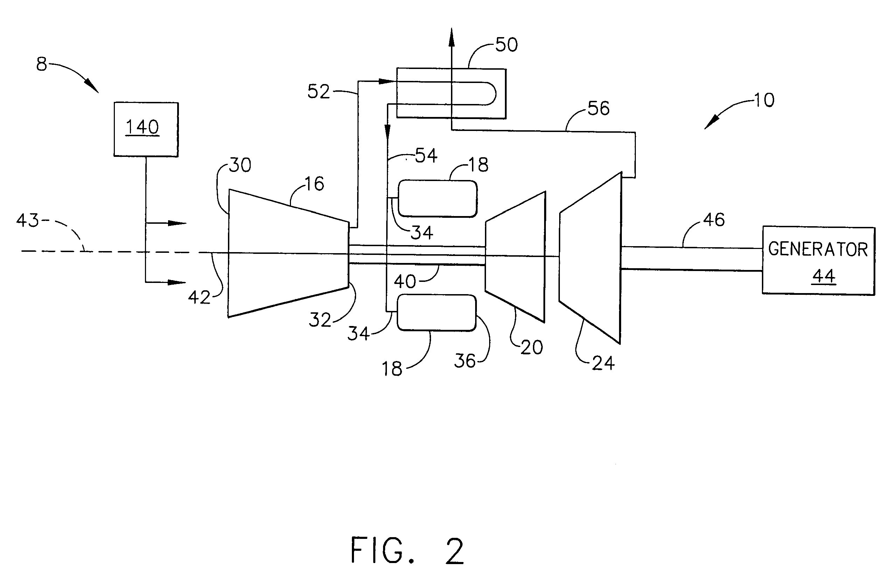

Figure 2 is a schematic illustration of an exemplary gas turbine generator assembly 8 that can be used with power system 6. Gas turbine generator assembly 8 includes a gas turbine engine 10 including, in serial flow relationship, a high-pressure compressor 16, a combustor 18, a high-pressure turbine 20, and a low-pressure or power turbine 24. High-pressure compressor 16 has an inlet 30 and an outlet 32. Combustor 18 has an inlet 34 that is substantially coincident with high-pressure compressor outlet 32, and an outlet 36. In one embodiment, combustor 18 is an annular combustor. In another embodiment, combustor 18 is a dry low emissions (DLE) combustor. In a further embodiment, combustor 18 is a can-annular combustor.

High-pressure turbine 20 is coupled to high-pressure compressor 16 with a first rotor shaft 40 that is substantially coaxially aligned with respect to a longitudinal centerline axis 43 of engine 10. Engine 10 may be used to drive a load, such as a generator 44, which may be coupled to low-pressure turbine 24 using a power turbine shaft 46. Alternatively, the load may be coupled to a forward extension (not shown) of rotor shaft 42. Gas turbine engine assembly 8 also includes a recuperator 50 that has a first fluid path 52 to facilitate channeling compressed air from high-pressure compressor 16 through recuperator 50, a second fluid path 54 to facilitate channeling heated air discharged from recuperator 50 to combustor 18, and a third fluid path 56 to facilitate channeling exhaust gases from low-pressure turbine 24 through recuperator 50.

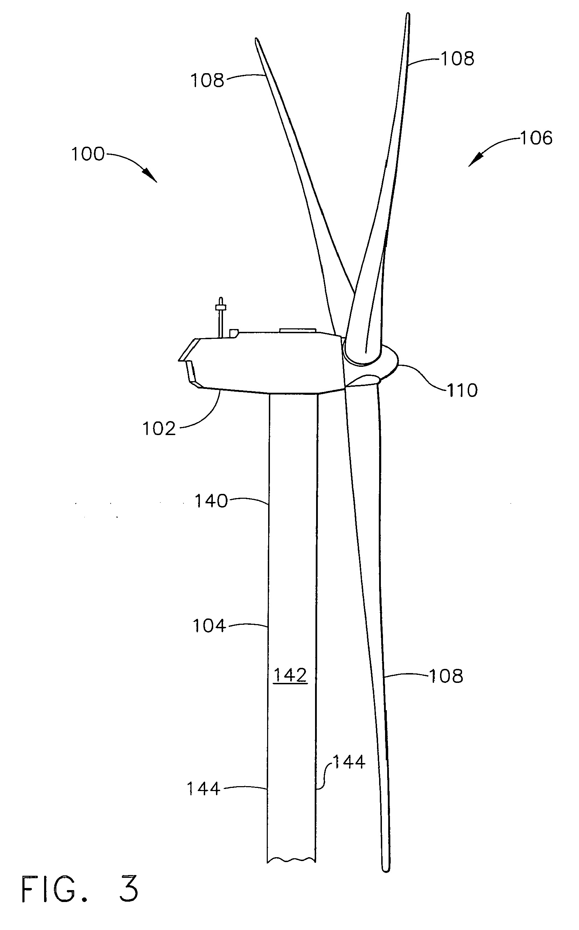

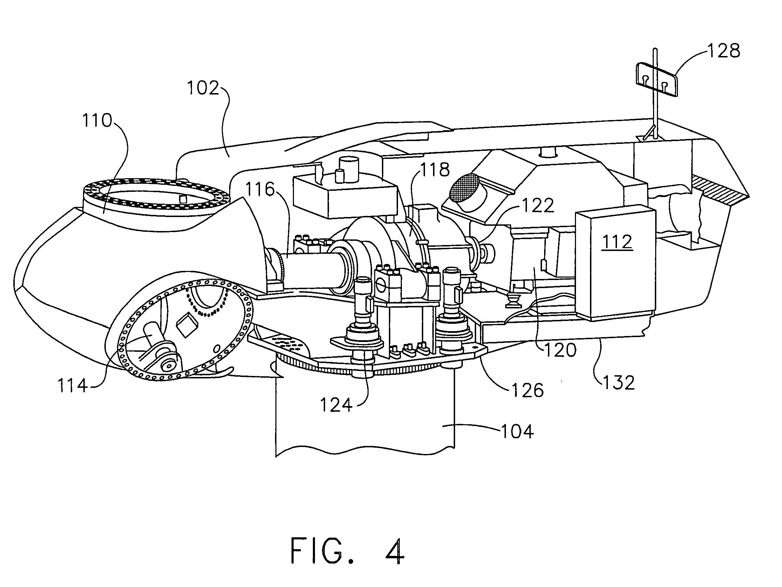

Figure 3 is a perspective view of exemplary wind turbine 100 that can be used with power system 6. Figure 4 is a perspective view of a portion of wind turbine 100 shown in Figure 3. In the exemplary embodiment, wind turbine 100 includes a nacelle 102 that is mounted atop a relatively tall tower 104. Wind turbine 100 also includes a rotor 106 that includes a plurality of rotor blades 108 that are each coupled to a rotating hub 110. Although wind turbine 100 is shown including three rotor blades 108, it should be realized that wind turbine 100 can include any number of rotor blades to facilitate operating wind turbine 100.

Moreover, wind turbine 100 includes a storage tank 140 that is configured to receive compressed air generated using a compressor assembly 120. In the exemplary embodiment, at least a portion of tower 104 is utilized to form storage tank 140, and thus at least a portion of tower 104 is utilized to store compressed air generated using compressor assembly 120. More specifically, at least a portion of tower 104 is substantially hollow such that compressed air generated by compressor assembly 120 can be stored within a cavity 142 defined by the exterior walls 144 of tower 104. Accordingly, the height and volume of tower 104 may be selectively sized to store a predetermined quantity of air discharged from compressor assembly 120.

In some configurations and referring to Figure 4, various components of wind turbine 100 are housed in nacelle 102 atop tower 104 of wind turbine 100. In one embodiment, wind turbine 100 includes one or more microcontrollers coupled within a control panel 112 that are used for overall system monitoring and control such as, but not limited to, pitch and speed regulation, high-speed shaft and yaw brake application, yaw and pump motor application and fault monitoring. In an alternative embodiment, wind turbine 100 utilizes a distributed or centralized control architecture (not shown) to perform system monitoring and control.

In the exemplary embodiment, the control system, i.e. control panel 112, transmits control signals to a variable blade pitch drive system 114 that includes at least one of an AC or DC pitch drive motor (not shown) to control the pitch of blades 108 that drive hub 110 as a result of wind. In some configurations, the pitches of blades 108 are individually controller by blade pitch drive system 114.

Wind turbine 100 also includes a main rotor shaft 116 (also referred to as a "low speed shaft") connected to hub 110 and a gearbox 118 that, in some configurations, utilizes a dual path geometry to drive a high speed shaft enclosed within gearbox 118. The high speed shaft (not shown in Figure 4) is used to drive compressor assembly 120 that is supported by a main frame 132. Optionally, compressor assembly 120 is driven utilizing a low-speed shaft (not shown) and the high-speed shaft is utilized to drive an electric generator.

Yaw drive 124 and yaw deck 126 provide a yaw orientation system for wind turbine 100. In some configurations, the yaw orientation system is electrically operated and controlled by the control system in accordance with information received from sensors used to measure shaft flange displacement, as described below. Either alternately or in addition to the flange displacement measuring sensors, some configurations utilize a wind vane 128 to provide information for the yaw orientation system. The yaw system is mounted on a flange provided atop tower 104.

During operation, wind is channeled through blades 108 thus causing main rotor shaft 116 to rotate. The rotational forces generated by blades 108 are transmitted to compressor assembly 120 via gearbox 118, thus causing compressor assembly 120 to compress air. The compressed air generated by compressor assembly 120 is channeled to storage device 140, i.e. tower 104, wherein the compressed air is stored for future use. Although the exemplary embodiment illustrates a single wind turbine 100 that is utilized to compress and store compressed air, it should be realized that a plurality of wind turbines 100 can be utilized to compress and store air to be utilized by a single gas turbine engine. Optionally, a single wind turbine 100 may be utilized to compress and store air that is then channeled to a plurality of gas turbine engine generator assemblies.

Accordingly, system 6 facilitates producing power and storing the wind energy generated by wind turbine 100 in the compressed air, i.e. storage tank 140 whenever wind energy can be harvested. In the exemplary embodiment, compressed air stored within storage tank 140 is channeled to at least one gas turbine engine 10 when the electricity demand exceeds a predetermined threshold.

Referring to figure 2, more specifically, air is drawn into high-pressure compressor inlet 30 from wind turbine storage tank 140, i.e. the compressed air stored within cavity 142 of tower 104. High-pressure compressor 16 compresses the air and delivers the compressed air to recuperator 50 via first fluid path 52. The compressed air is then heated within recuperator 50 utilizing low-pressure turbine 24 exhaust gases that are channeled through recuperator 50 utilizing third fluid path 56. Channeling exhaust gases through recuperator 50 facilitates increasing an operational temperature of the air channeled therethrough. Accordingly, air discharged from low-pressure compressor 24 is channeled through recuperator 50, wherein an operating temperature of the compressed air is increased from a first operational temperature to a second operational temperature that is greater than the first operational temperature utilizing exhaust gases discharged from low-pressure turbine 24. The heated compressed air is then channeled from recuperator 50 to an inlet 34 of combustor 18 via second fluid path 54 where it is mixed with fuel and ignited to generate high temperature combustion gases. The combustion gases are channeled from combustor 18 to drive turbines 20 and 24.

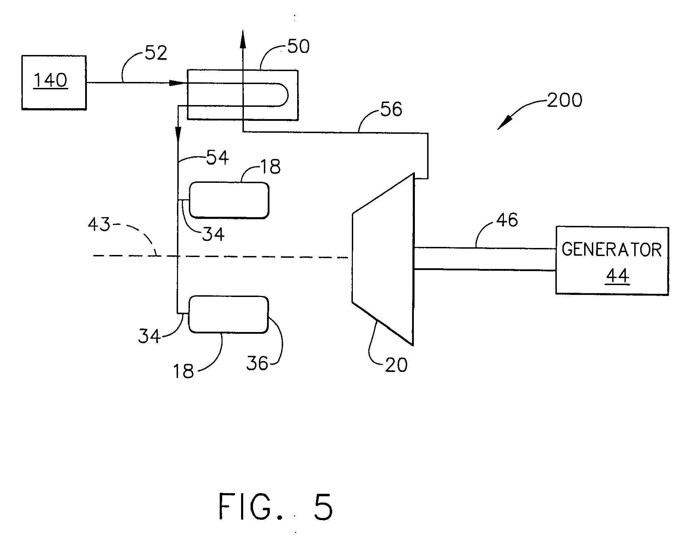

Figure 5 is another exemplary turbine generator assembly 200 that can be utilized with wind turbine 100 shown in Figure 1, Figure 3, and Figure 4. Turbine generator assembly 200 is substantially similar to gas turbine engine generator assembly, shown in Figure 2, and components in assembly 200 that are identical to components of assembly 10 are identified in Figure 5 using the same reference numerals used in Figure 3.

Assembly 200 includes a combustor 18 and a high-pressure turbine 20 that is substantially coaxially aligned with respect to a longitudinal centerline axis 43 of assembly 200. Combustor 18 has an inlet 34 and an outlet 36. In one embodiment, combustor 18 is an annular combustor. In another embodiment, combustor 18 is a dry low emissions (DLE) combustor. In a further embodiment, combustor 18 is a can-annular combustor.

Assembly 200 may be used to drive a load, such as a generator 44, which may be coupled to high-pressure turbine 20 using a power turbine shaft 46. Alternatively, the load may be coupled to a forward extension (not shown) of high-pressure turbine 20. Assembly 200 also includes a recuperator 50 that has a first fluid path 52 to facilitate channeling compressed air received from storage tank 140, i.e. tower 104 through recuperator 50, a second fluid path 54 to facilitate channeling heated air discharged from recuperator 50 to combustor 18, and a third fluid path 56 to facilitate channeling exhaust gases from high-pressure turbine 20 through recuperator 50.

In the exemplary embodiment, assembly 200 does not include a high pressure compressor to supply compressed air to combustor 18. Rather, the total quantity of air utilized within combustor 18 to generate power to drive turbine 20 is supplied from at least one wind turbine tank 140. Accordingly, wind turbine storage tank 140 is selectively sized to store a predetermined quantity of compressed air such that assembly 200 can be operated without utilizing a high-pressure compressor to supply additional air to supplement the combustion process.

During operation, wind is channeled through blades 108 thus causing main rotor shaft 116 to rotate. The rotational forces generated by blades 108 are then transmitted to compressor assembly 120 via gearbox 118, thus causing compressor assembly 120 to compress air. The compressed air generated by compressor assembly 120 is channeled to storage device 140, i.e. tower 104, wherein the compressed air is stored for future use. Although the exemplary embodiment illustrates a single wind turbine 100 that is utilized to compress and store compressed air, it should be realized that a plurality of wind turbines 100 can be utilized to compress and store air to be utilized by a single gas turbine engine. Optionally, a single wind turbine 100 may be utilized to compress and store air that is then channeled to a plurality of gas turbine engine generator assemblies.

More specifically, air is drawn into recuperator 50 along first fluid path 52 from wind turbine storage tank 140, i.e. the compressed air stored within cavity 142 of tower 104. The compressed air is then heated within recuperator 50 utilizing high-pressure turbine 20 exhaust gases that are channeled through recuperator 50 utilizing third fluid path 56. Channeling exhaust gases through recuperator 50 facilitates increasing an operational temperature of the air channeled therethrough. Accordingly, air discharged from storage tank 140 is channeled through recuperator 50, wherein an operating temperature of the compressed air is increased from a first operational temperature to a second operational temperature that is greater than the first operational temperature utilizing exhaust gases discharged from high-pressure turbine 20. The heated compressed air is then channeled from recuperator 50 to an inlet 34 of combustor 18 via second fluid path 54 where it is mixed with fuel and ignited to generate high temperature combustion gases. The combustion gases are channeled from combustor 18 to drive turbine 20.

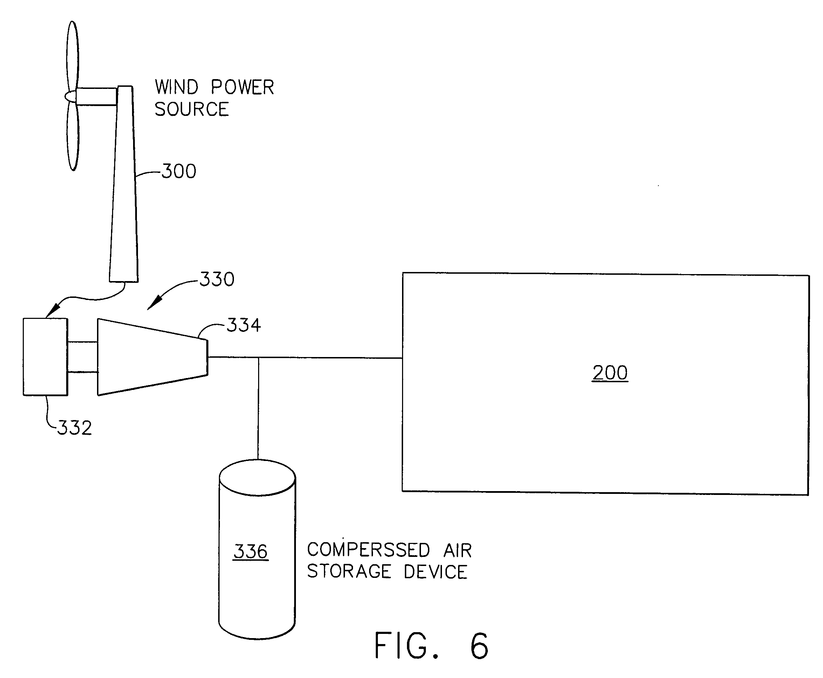

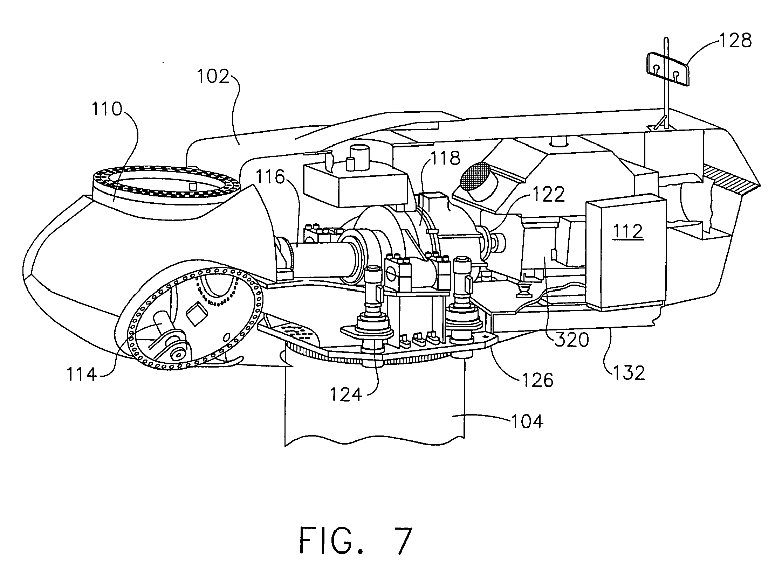

Figure 6 is a perspective view of an exemplary wind turbine assembly 300 that can be utilized with assembly 200 shown in Figure 5. Figure 7 is a portion of wind turbine 300 shown in Figure 6. Wind turbine 300 is substantially similar to wind turbine 100, shown in Figure 1, and components in wind turbine 300 that are identical to components of wind turbine 100 are identified in Figures 6 and 7 using the same reference numerals used in Figure 1.

In the exemplary embodiment, wind turbine 300 includes a nacelle 102 that is mounted atop a relatively tall tower 104. Wind turbine 100 also includes a rotor 106 that includes a plurality of rotor blades 108 that are each coupled to a rotating hub 110. In some configurations and referring to Figure 7, various components of wind turbine 300 are housed in nacelle 102 atop tower 104 of wind turbine 300. The height of tower 104 is selected based upon factors and conditions known in the art. In one embodiment, wind turbine 300 includes one or more microcontrollers coupled within a control panel 112 that are used for overall system monitoring and control such as, but not limited to, pitch and speed regulation, high-speed shaft and yaw brake application, yaw and pump motor application and fault monitoring. In an alternative embodiment, wind turbine 300 utilizes a distributed or centralized control architecture (not shown) to perform system monitoring and control.

In the exemplary embodiment, the control system, i.e. control panel 112, transmits control signals to a variable blade pitch drive system 114 that includes a DC pitch drive motor (not shown) to control the pitch of blades 108 that drive hub 110 as a result of wind. In some configurations, the pitches of blades 108 are individually controller by blade pitch drive system 114.

Wind turbine 300 also includes a main rotor shaft 116 (also referred to as a "low speed shaft") connected to hub 110 and a gearbox 118 that, in some configurations, utilizes a dual path geometry to drive a high speed shaft enclosed within gearbox 118. The high speed shaft (not shown in Figure 6) is used to drive a first generator 320 that is supported by a main frame 132 as shown in Figure 7. In some configurations, rotor torque is transmitted via a coupling 122. First generator 320 may be of any suitable type, for example and without limitation, a wound rotor induction generator. Another suitable type by way of non-limiting example is a multi-pole generator that can run at the speed of the low speed shaft in a direct drive configuration, without requiring a gearbox.

Yaw drive 124 and yaw deck 126 provide a yaw orientation system for wind turbine 300. In some configurations, the yaw orientation system is electrically operated and controlled by the control system in accordance with information received from sensors used to measure shaft flange displacement, as described below. Either alternately or in addition to the flange displacement measuring sensors, some configurations utilize a wind vane 128 to provide information for the yaw orientation system. The yaw system is mounted on a flange provided atop tower 104.

In the exemplary embodiment, wind turbine 300 also includes a compressor assembly 330 that includes an air compressor drive 332 and an air compressor 334 that is coupled to air compressor drive 332. In one embodiment, compressor drive 332 is an impeller or fan that is coupled to air compressor 334 such that when compressor drive 332 is rotated, a rotational force is transmitted to air compressor 334 to facilitate rotating air compressor 334 thus generating compressed air. For example, and in one embodiment, compressor assembly 330 is coupled within nacelle 102 such that the inlet of compressor drive 332 is approximately coaxial with the airstream channeled through blades 108 thus causing compressor drive 332 to also rotate.

In another embodiment, compressor assembly 330 is coupled to wind turbine 100 utilizing a shaft (not shown) such that wind moving through blades 108 causes the shaft to rotate thus rotating air compressor 334 to generate compressed air. For example, in on embodiment, the shaft is coupled to gearbox 118 such that gearbox 118 drives the shaft and thus drives air compressor 334. Optionally, generator 320 is utilized to supply power to air compressor 334 to facilitate operating air compressor 334. Although the exemplary embodiment illustrates a single wind turbine 100 and a single air compressor 334 configured to channel compressed air to a single air storage device 336, a plurality of wind turbines 300 may be coupled to a plurality of compressors 334 that are each configured to channel compressed air to a single air storage device 336. Optionally, a plurality of air storage devices 336 may be coupled together in a series arrangement to a single wind turbine 300.

At least one wind turbine 300 is coupled to air compressor 334 such that wind turbine 300 drives air compressor 334 to generate compressed air. The compressed air is then channeled to air storage device 336 wherein the compressed air is stored until the compressed air is utilized by assembly 200. Accordingly, wind turbine 300 facilitates producing power and storing the wind energy generated by wind turbine 300 in the compressed air, i.e. storage device 336 whenever wind energy can be harvested. In the exemplary embodiment, compressed air stored within storage device 336 is channeled to assembly 200 when the electricity demand exceeds a predetermined threshold.

More specifically, air is drawn into recuperator 50 along first fluid path 52 from wind turbine storage tank 336. The compressed air is then heated within recuperator 50 utilizing low-pressure turbine 24 exhaust gases that are channeled through recuperator 50 utilizing third fluid path 56. Channeling exhaust gases through recuperator 50 facilitates increasing an operational temperature of the air channeled therethrough. Accordingly, air discharged from storage tank 336 is channeled through recuperator 50, wherein an operating temperature of the compressed air is increased from a first operational temperature to a second operational temperature that is greater than the first operational temperature utilizing exhaust gases discharged from low-pressure turbine 24. The heated compressed air is then channeled from recuperator 50 to an inlet 34 of combustor 18 via second fluid path 54 where it is mixed with fuel and ignited to generate high temperature combustion gases. The combustion gases are channeled from combustor 18 to drive turbine 24.

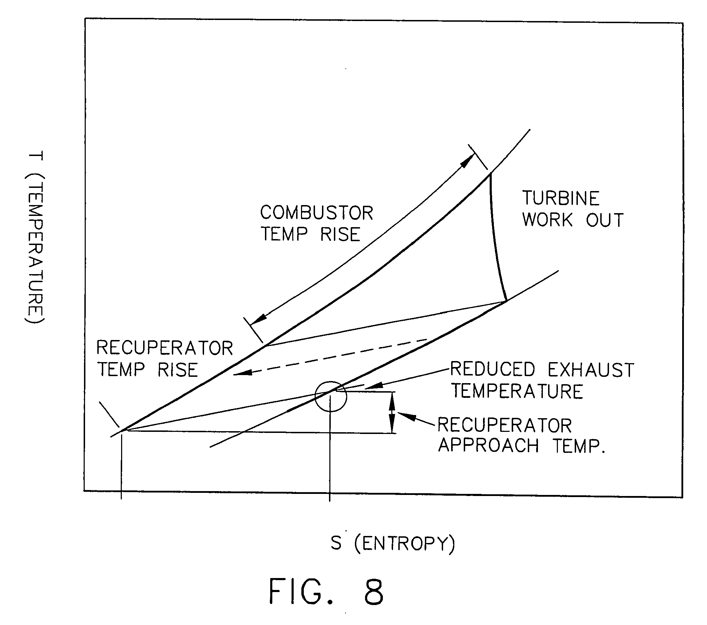

Figure 8 is a temperature (T) and entropy (S) chart illustrating the systems described herein during normal operation. More specifically, Figure 8 illustrates that the working fluid, i.e. compressed air temperature is raised in the recuperator followed by further temperature rise in the combustor. Additionally, energy is extracted from the air flow in the turbine and the hot exhaust flow returns to the recuperator to preheat the incoming air.

Accordingly, as the pressure of the air flow from the compressed air storage device drops, temperature extraction from the turbine is reduced, thus increasing the turbine exhaust temperature. The temperature of the air entering the recuperator rises as a result and this also results in a corresponding increase in the temperature of the preheated air. The resulting efficiency characteristic is relatively insensitive to changes in the compressed air pressure although the highest power may be produced when the density of the air i.e. the pressure is highest.

Accordingly, the power generation system described herein facilitates storing energy produced by a wind farm, which can be harvested whenever the wind is available. Moreover, the stored energy from the wind can be utilized when the power demand is highest. In addition, the power generation system described herein provides a higher net conversion of gas energy to electricity using a recuperated gas turbine engine. Specifically, described herein is a system that includes at least one wind turbine system that is utilized to compress and store compressed air in a storage tank. The compressed air is discharged from the storage tank into a recuperator wherein a temperature of the compressed air is increased. The compressed air is then channeled from the recuperator into a combustor where fuel is ignited to further increase the temperature of the compressed air. The compressed air is then channeled to a turbine to produce power. Additionally, turbine exhaust is channeled through the recuperator to facilitate increasing the operational temperature of the compressed air channeled from the wind turbine.

While the invention has been described in terms of various specific embodiments, those skilled in the art will recognize that the invention can be practiced with modification within the spirit and scope of the claims.

## Claims

1. A power generating system (6) comprising:
a wind turbine (100);
a storage device (140) configured to store energy generated by said wind turbine as compressed air (9); and
a turbine assembly (8) configured to receive the compressed air when needed.

2. A power generating system (6) in accordance with Claim 1 further comprising:
an air compressor (334) operationally coupled to said wind turbine (100); said turbine assembly (8) comprising
a high-pressure compressor (16);
a combustor (18);
a turbine (20); and
a heat exchanger (50) coupled in flow communication with said high-pressure compressor, said heat exchanger configured to receive compressed air (9) discharged from said high-pressure compressor and channel the compressed air to said combustor to facilitate increasing a thermal efficiency of the gas turbine engine (10).

3. A power generating system (6) in accordance with Claim 2 wherein said heat exchanger (50) comprises a recuperator, said gas turbine engine assembly is configured to channel hot turbine discharge air to said recuperator to facilitate increasing an operating temperature of the compressed air (9) channeled therethrough.

4. A power generating system (6) in accordance with Claim 3 wherein said high-pressure compressor (16) is configured to receive the air from said air compressor, further compress the compressed air (9), and channel the further compressed air through said recuperator (50).

5. A power generating system (6) in accordance with Claim 2 wherein said wind turbine (100) comprises:
a tower (104) having a cavity (142) defined therein in flow communication with said gas turbine engine assembly;
a nacelle (102) coupled to said tower; and
an air compressor (334) coupled within said tower, said air compressor configured to channel compressed air (9) into said cavity.

6. A power generating system (6) in accordance with Claim 2 wherein said wind turbine (100) comprises:
a tower (104);
a nacelle (102) coupled to said tower; and
an air compressor (334) coupled externally to said tower, said air compressor configured to channel compressed air (9) into a storage device (140) coupled externally to said wind turbine.

7. A power generating system (6) in accordance with Claim 1 further comprising a generator (44) operationally coupled to said gas turbine engine assembly.

8. A power generating system (6) comprising:
a wind turbine (100);
an air compressor (334) operationally coupled to said wind turbine; and
a turbine assembly (8) comprising:
a combustor (18);
a turbine (20);
a heat exchanger (50) coupled in flow communication with said wind turbine; and
a generator (44) operationally coupled to said turbine.

9. A power generating system (6) in accordance with Claim 8 wherein said turbine engine assembly does not include a high-pressure compressor (16), said heat exchanger (50) configured to receive compressed air (9) discharged from said wind turbine (100) and channel the compressed air to said combustor (18) to facilitate increasing a thermal efficiency of the gas turbine engine (10).

10. A power generating system (6) in accordance with Claim 8 wherein said heat exchanger (50) comprises a recuperator, said turbine assembly (8) is configured to channel turbine exhaust airflow to said recuperator to facilitate increasing an operating temperature of the compressed air (9) channeled therethrough.
